# EUROPÄISCHE PATENTSCHRIFT

(11) **EP 1 097 184 B1**
(45) Veröffentlichungstag und Bekanntmachung des Hinweises auf die Patenterteilung: **27.03.2002**
(21) Anmeldenummer: 99932787.7
(22) Anmeldetag: 02.07.1999
(51) Int. Cl.: C09B 67/30, D06P 1/22

(54) **KONZENTRIERTE LEUKOINDIGOLÖSUNGEN**
CONCENTRATED LEUCOINDIGO SOLUTIONS
SOLUTIONS DE LEUCOINDIGO CONCENTREES

(30) Priorität: 13.07.1998 DE 19831291
(43) Veröffentlichungstag der Anmeldung: 09.05.2001
(73) Patentinhaber: DyStar Textilfarben GmbH & Co. Deutschland KG, 60318 Frankfurt am Main (DE)
(72) Erfinder: GÄNG, Manfred, D-67240 Bobenheim-Roxheim (DE); KRÜGER, Rudolf, D-67273 Weisenheim (DE); MIEDERER, Peter, D-67454 Ha loch (DE)
(86) Internationale Anmeldenummer: EP9904591
(87) Internationale Veröffentlichungsnummer: WO0004100

(56) Entgegenhaltungen:
- WO-A-94/23114
- DE-A- 2 729 073
- DE-A- 19 502 968
- FR-A- 473 536
- FR-A- 769 353
- FR-E- 67 043

## Beschreibung

Die vorliegende Erfindung betrifft neue konzentrierte Leukoindigolösungen, welche im wesentlichen aus 25 bis 55 Gew.-% Leukoindigo in Form des Leukoindigosalzes, eines Gemisches mindestens zweier Alkalimetallhydroxide, in welchem der Anteil keines der Alkalimetallhydroxide mehr als 70 mol-% beträgt, in einer Menge, die im wesentlichen der zur Überführung des Leukoindigos in das neutrale Leukoindigosalz stöchiometrisch erforderlichen Menge entspricht, und Wasser bestehen.

Weiterhin betrifft die Erfindung die Herstellung dieser Leukoindigolösungen sowie ihre Verwendung zum Färben von cellulosehaltigem Textilmaterial.

Indigo stellt einen seit langer Zeit bekannten Küpenfarbstoff dar, der zum Färben von cellulosehaltigem Textilmaterial, insbesondere von Baumvoll-Kettgarnen für blue-denim-Artikel, eingesetzt wird.

Zum Färben muß der wasserunlösliche Indigo zunächst durch Reduktion (Verküpen) in die wasserlösliche faseraffine Leukoform überführt werden, die dann nach dem Aufziehen auf das zu färbende Material wieder zum wasserunlöslichen Küpenfarbstoff-Pigment oxidiert wird.

Aus der WO-A-94/23114 ist ein ökologisch vorteilhaftes Färbeverfahren bekannt, bei dem Indigo in Form der durch katalytische Reduktion einer Indigosuspension erhaltenen, natronalkalischen, wäßrigen Leukoindigolösung eingesetzt wird und das eine drastische Reduktion der bei den herkömmlichen Färbeverfahren auftretenden Abwasserbelastung durch Sulfat oder organische Substanzen ermöglicht.

Da es jedoch bislang nicht möglich war, konzentrierte Leukoindigolösungen, die stabil sind und nicht zur Auskristallisation neigen, herzustellen, weisen auch die in der WO-A-94/23114 eingesetzten Leukoindigolösungen nur einen Leukoindigogehalt von 20 Gew.-% auf.

Der Erfindung lag daher die Aufgabe zugrunde, möglichst konzentrierte Leukoindigolösungen bereitzustellen, die eine weitere Verringerung der Dosiervolumina beim Färben erlauben und damit die Gefahr des Überlaufens der Färbebäder noch wirksamer verkleinern sowie zur Senkung der Transportkosten für die Beförderung der Farbstofflösung vom Hersteller zum Färber beitragen.

Demgemäß wurden die eingangs definierten konzentrierten Leukoindigolösungen gefunden.

Was das erfindungswesentliche Merkmal der Verwendung eines Gemisches mindestens zweier Alkalimetallhydroxide betrifft, sei auf die FR-B-769353 verwiesen, aus der bekannt ist, dass die Leukoform in Gegenwart von Ätznatron und Ätzkali nicht gut kristallisiert, wenn die Menge an Kaliumhydroxid mehr als die Hälfte der Gesamtmenge an Hydroxid im Gemisch ausmacht.

Weiterhin wurde ein Verfahren zur Herstellung dieser Leukoindigolösungen durch katalytische Hydrierung von alkalisch-wäßrigen Indigosuspensionen gefunden, welches dadurch gekennzeichnet ist, daß man die Hydrierung stufenweise durchführt und zunächst eine 20 bis 30 gew.-%ige Indigosuspension, die 4 bis 10 Gew.-% eines Gemisches mindestens zweier Alkalimetallhydroxide enthält, in welchem der Anteil keines der Alkalimetallhydroxide mehr als 70 mol-% beträgt, zu Leukoindigo hydriert, dann weiteren Indigo zur Einstellung des letztendlich gewünschten Leukoindigogehalts sowie gegebenenfalls auch Alkalimetallhydroxidgemisch zugibt und die Hydrierung fortsetzt.

Außerdem wurde ein weiteres Herstellungsverfahren gefunden, welches dadurch gekennzeichnet ist, daß man zunächst eine 20 bis 30 gew.-%ige alkalisch-wäßrige Indigosuspension, die 4 bis 10 Gew.-% des oben beschriebenen Alkalimetallhydroxidgemisches enthält, katalytisch hydriert und die erhaltene Leukoindigolösung durch Eindampfen auf den gewünschten Leukoindigogehalt einstellt.

Nicht zuletzt wurde die Verwendung der Leukoindigolösungen zum Färben von cellulosehaltigem Textilmaterial gefunden.

Die erfindungsgemäßen Leukoindigolösungen enthalten 25 bis 55 Gew.-%, bevorzugt 30 bis 55 Gew.-% und besonders bevorzugt 35 bis 50 Gew.-% und ganz besonders bevorzugt 40 bis 45 Gew.-% Leukoindigo als Leukoindigo-Alkalimetallsalz.

Der zweite wesentliche Bestandteil der erfindungsgemäßen Leukoindigolösungen ist das Alkalimetallhydroxidgemisch, mit dem die Leukoindigo-Küpensäure in das Leukoindigo-Küpensalz überführt wird.

Das Alkalimetallhydroxidgemisch enthält dabei erfindungsgemäß mindestens zwei verschiedene Alkalimetallhydroxide, wobei der Anteil keines der Alkalimetallhydroxide in dem Gemisch mehr als 70 mol-% betragen soll.

Geeignete Alkalimetallhydroxide sind z.B. Lithiumhydroxid, Natriumhydroxid und Kaliumhydroxid, die als Dreiergemisch oder in Form der jeweiligen Zweierkombinationen vorliegen können, wobei Gemische von Natriumhydroxid und Kaliumhydroxid bevorzugt sind.

Handelt es sich um Gemische zweier Alkalimetallhydroxide, so beträgt der Gehalt des einen Hydroxids bevorzugt 70 bis 30 mol-% und der des anderen Hydroxids entsprechend 30 bis 70 mol-%. Besonders bevorzugt sind Gehalte von 60 bis 40 mol-% bzw. 40 bis 60 mol-%. Ganz besonders bevorzugt sind die beiden Hydroxide (insbesondere Natrium- und Kaliumhydroxid) in annähernd gleichen Gewichtsmengen enthalten, liegt ihr Gewichtsverhältnis also im Bereich von 0,8:1 bis 1,2:1, insbesondere bei etwa 1:1.

Die erfindungsgemäßen Leukoindigolösungen weisen einen Gehalt an dem Alkalihydroxidgemisch auf, der im wesentlichen der stöchiometrisch zur vollständigen Bildung des neutralen Küpensalzes erforderlichen Menge entspricht, d.h. in der Regel 1,5 bis 2,5 mol Alkalihydroxidgemisch je mol Leukoindigo.

Überraschenderweise sind die erfindungsgemäßen Leukoindigolösungen sehr stabil und neigen im Gegensatz zu den bekannten Leukoindigolösungen. bei denen der Leukoindigo als reines Natriumsalz vorliegt, nicht zur Auskristallisation. So sind die erfindungsgemäßen Leukoindigolösungen bei einem Gehalt von bis zu etwa 40 Gew.-% auch bei niedrigen Temperaturen bis zu etwa 10°C unbegrenzt unter Stickstoff lagerbar (30 bis 35 gew.-%ige Lösungen können sogar bei Frost transportiert und gehandhabt werden), bei 50 bis 55 gew.-%igen Lösungen empfiehlt sich eine Lagerung bei etwa 40 bis 60°C, um Auskristallisation zu vermeiden.

Die erfindungsgemäßen Leukoindigolösungen können vorteilhaft nach den beiden ebenfalls erfindungsgemäßen Verfahren hergestellt werden.

Die Herstellung erfolgt bei dem einen Verfahren durch stufenweise katalytische Hydrierung. Dabei geht man zweckmäßigerweise wie folgt vor:

Zunächst hydriert man eine niedrigkonzentrierte alkalisch-wäßrige Indigosuspension, die etwa 20 bis 30 Gew.-% Indigo und 4 bis 10 Gew.-% des erfindungsgemäßen Alkalimetallhydroxidgemisches enthält, in an sich bekannter Weise unter Verwendung eines Nickelkatalysators (Raney-Nickel) bei einem Wasserstoffdruck von üblicherweise 2 bis 6 bar und einer Temperatur von in der Regel 60 bis 90°C. Dann gibt man die zur Einstellung des letztendlich gewünschten Leukoindigogehalts fehlende Menge Indigo, entweder als Feststoff oder als wäßrige Suspension, sowie, falls im ersten Schritt nicht ausreichend Alkalimetallhydroxid eingesetzt wurde, eine ergänzende Menge Alkalimetallhydroxidgemisch zu und setzt die Hydrierung fort. Nach Abfiltrieren des Katalysators lagert man die Leukoindigolösung unter einem Schutzgas wie Stickstoff.

In der Regel benötigen beide Hydrierungsschritte zusammen etwa 10 bis 12 h.

Bei dem anderen Verfahren stellt man zunächst analog zu dem bereits beschriebenen Verfahren durch katalytische Hydrierung eine etwa 20 bis 30 gew.-%ige Leukoindigolösung her und dampft diese dann bis zum Erreichen des gewünschten Leukoindigogehalts ein. Bevorzugt erfolgt die Abdestillation des Wassers unter Sauerstoffausschluß bei einem Druck von etwa 60 bis 1000 mbar und einer Temperatur von 45 bis 100°C.

Mit Hilfe der beiden erfindungsgemäßen Verfahren können die neuen Leukoindigolösungen auf einfache Weise reproduzierbar hergestellt werden.

Sie eignen sich vorteilhaft zum Färben von cellulosehaltigem Textilmaterial, wobei wie in der WO-A-94/23114 beschrieben vorgegangen werden kann.

### Beispiele

### Herstellung von erfindungsgemäßen Leukoindigolösungen

### Beispiel 1

In einem 11-Glasautoklaven mit Scheibenrührer wurden 262 g einer 23 gew.-%igen wäßrigen Indigosuspension, die 48 g (1,2 mol) Natriumhydroxid und 45 g (0,8 mol) Kaliumhydroxid enthielt, nach Zugabe von 6 g Raney-Nickel in Form einer 50 gew.-%igen wäßrigen Suspension und Spülen mit Stickstoff auf 70°C erhitzt und 8 h unter einem Wasserstoffdruck von 3 bar hydriert.

Nach Entspannen, Spülen mit Stickstoff und Abkühlen auf 30°C wurden weitere 262 g Indigogranulat, 48 g Natriumhydroxid und 45 g Kaliumhydroxid sowie weitere 2 g Raney-Nickel zu der im ersten Hydrierungsschritt erhaltenen 23 gew.-%igen Leukoindigolösung gegeben. Dann wurde nach Spülen.mit Stickstoff weitere 3 h bei 70°C unter einem Wasserstoffdruck von 3 bar hydriert.

Nach Entspannen, Spülen mit Stickstoff und Abkühlen auf Raumtemperatur wurde der Katalysator abfiltriert.

Die erhaltene 46 gew.-%ige Leukoindigolösung zeigte bei Lagerung unter Stickstoff bei Raumtemperatur keine Neigung zur Kristallisation.

### Beispiel 2

Aus 500 ml der im ersten Schritt von Beispiel 1 erhaltenen Leukoindigolösung wurden nach Spülen mit Stickstoff unter einem Druck von zunächst 120 mbar und dann 80 mbar und einer Badtemperatur von 120°C in 2 h 213 ml Wasser abdestilliert. Die verbleibende Lösung wurde unter Stickstoff auf Raumtemperatur abgekühlt.

Die erhaltene 40 gew.-%ige Leukoindigolösung zeigte nach viermonatiger Lagerung unter Stickstoff bei Raumtemperatur keine Neigung zur Kristallisation.

### Beispiel 3

In einem 11-Hydrierkolben mit Intensivrührung wurde ein Gemisch aus 474 g einer 23 gew.-%igen wäßrigen Leukoindigo-Salzlösung (Kalium-/Natriumsalz, Gewichtsverhältnis 1:1), 90 g einer 45 gew.-%igen wäßrigen Alkalimetallhydroxidlösung (KOH/NaOH, Gewichtsverhältnis 1:1) und 220 g trockenem Indigo nach Zugabe von 10 g Raney-Nickel in Form einer 50 gew.-%igen wäßrigen Suspension und Spülen mit Stickstoff auf 70°C erhitzt und ca. 4 h mit Wasserstoff unter Normaldruck hydriert.

Nach Spülen mit Stickstoff, Abkühlen auf 40 bis 50°C und Abfiltrieren des Katalysators wurde die Konzentration der Leukoindigo-Salzlösung durch Zugabe von Wasser auf 40 Gew.-% eingestellt.

### Beispiel 4

Aus 750 g einer 25 gew.-%igen wäßrigen Leukoindigo-Salzlösung (Kalium-/Natriumsalz, Gewichtsverhältnis 1:1) wurden bei Normaldruck durch Überleiten eines schwachen Stickstoffstroms bei einer Badtemperatur von 140°C 333 g Wasser abdestilliert. Es wurde eine 45 gew.-%ige Leukoindigolösung erhalten.

### Beispiel 5

Ein Gemisch aus 500 g Wasser, 132 g trockenem Indigo, 12,8 g festem Natriumhydroxid, 17,9 g festem Kaliumhydroxid und 7,7 g festem Lithiumhydroxid wurde nach Zugabe von 5 g Raney-Nickel in Form einer 50 gew.-%igen wäßrigen Suspension und Spülen mit Stickstoff auf 70°C erhitzt und etwa 3,5 h unter Normaldruck hydriert.

Die erhaltene ca. 20 gew.-%ige Leukoindigolösung wurde analog zu Beispiel 4 durch Abdestillieren von 226 g Wasser auf einen Leukoindigogehalt von 45 Gew.-% eingestellt.

## Patentansprüche

1. Konzentrierte Leukoindigolösungen, im wesentlichen bestehend aus 25 bis 55 Gew.-% Leukoindigo in Form des Leukoindigosalzes, eines Gemisches mindestens zweier Alkalimetallhydroxide, in welchem der Anteil keines der Alkalimetallhydroxide mehr als 70 mol-% beträgt, in einer Menge, die im wesentlichen der zur Überführung des Leukoindigos in das neutrale Leukoindigosalz stöchiometrisch erforderlichen Menge entspricht, und Wasser.

2. Leukoindigolösungen nach Anspruch 1, bei denen die enthaltenen Alkalimetallhydroxide ansgewählt sind aus der Gruppe Lithiumhydroxid, Natriumhydroxid und Kaliumhydroxid.

3. Leukoindigolösungen nach Anspruch 1 oder 2, die Natriumhydroxid und Kaliumhydroxid enthalten.

4. Leukoindigolösungen nach den Ansprüchen 1 bis 3, die Natriumhydroxid und Kaliumhydroxid im Molverhältnis 3:2 bis 2:3 enthalten.

5. Leukoindigolösungen nach den Ansprüchen 1 bis 4, die 35 bis 45 Gew.-% Leukoindigo enthalten.

6. Verfahren zur Herstellung von Leukoindigolösungen gemäß den Ansprüchen 1 bis 5 durch katalytische Hydrierung von alkalisch-wäßrigen Indigosuspensionen, **dadurch gekennzeichnet, daß** man die Hydrierung stufenweise durchführt und zunächst eine 20 bis 30 gew.-%ige Indigosuspension, die 4 bis 10 Gew.-% eines Gemisches mindestens zweier Alkalimetallhydroxide enthält, in welchem der Anteil keines der Alkalimetallhydroxide mehr als 70 mol-% beträgt, zu Leukoindigo hydriert, dann weiteren Indigo zur Einstellung des letztendlich gewünschten Leukoindigogehalts sowie gegebenenfalls auch Alkalimetallhydroxidgemisch zugibt und die Hydrierung fortsetzt.

7. Verfahren zur Herstellung von Leukoindigolösungen gemäß den Ansprüchen 1 bis 5, **dadurch gekennzeichnet, daß** man zunächst eine 20 bis 30 gew.-%ige alkalisch-wäßrige Indigosuspension, die 4 bis 10 Gew.-% eines Gemisches mindestens zweier Alkalimetallhydroxide enthält, in welchem der Anteil keines der Alkalimetallhydroxide mehr als 70 mol-% beträgt, katalytisch hydriert und die erhaltene Leukoindigolösung durch Eindampfen auf den gewünschten Leukoindigogehalt einstellt.

8. Verwendung von Leukoindigolösungen gemäß den Ansprüchen 1 bis 5 zum Färben von cellulosehaltigem Textilmaterial.

## Claims

1. Concentrated leuco indigo solutions consisting essentially of from 25 to 55% by weight of leuco indigo in the form of the leuco indigo salt, an amount which is essentially stoichiometrically sufficient to convert the leuco indigo into the neutral leuco indigo salt of a mixture of at least two alkali metal hydroxides wherein none of the alkali metal hydroxides accounts for more than 70 mol%, and water.

2. Leuco indigo solutions as claimed in claim 1, wherefor the alkali metal hydroxides are selected from the group consisting of lithium hydroxide, sodium hydroxide and potassium hydroxide.

3. Leuco indigo solutions as claimed in claim 1 or 2, comprising sodium hydroxide and potassium hydroxide.

4. Leuco indigo solutions as claimed in any of claims 1 to 3, comprising sodium hydroxide and potassium hydroxide in a molar ratio of from 3:2 to 2:3.

5. Leuco indigo solutions as claimed in any of claims 1 to 4, comprising from 35 to 45% by weight of leuco indigo.

6. A process for preparing leuco indigo solutions as claimed in any of claims 1 to 5 by catalytic hydrogenation of alkaline aqueous indigo suspensions, which comprises performing the hydrogenation in stages and first hydrogenating a from 20 to 30% strength by weight indigo suspension comprising from 4 to 10% by weight of a mixture of at least two alkali metal hydroxides wherein none of the alkali metal hydroxides accounts for more than 70 mol% to form leuco indigo, then adding further indigo to set the ultimately desired leuco indigo content and also, if appropriate, alkali metal hydroxide mixture, and continuing the hydrogenation.

7. A process for preparing leuco indigo solutions as claimed in any of claims 1 to 5, which comprises first catalytically hydrogenating a from 20 to 30% strength by weight alkaline aqueous indigo suspension comprising from 4 to 10% by weight of a mixture of at least two alkali metal hydroxides wherein none of the alkali metal hydroxides accounts for more than 70 mol% and setting the resulting leuco indigo solution to the desired leuco indigo content by evaporation.

8. The use of leuco indigo solutions as claimed in any of claims 1 to 5 for dyeing cellulosic textile material.

## Revendications

1. Solutions concentrées de leucodérivé d'indigo, essentiellement constituées de 25 à 55% en poids de leucodérivé d'indigo sous forme du sel de leucodérivé d'indigo, d'un mélange d'au moins deux hydroxydes de métaux alcalins, dans lequel la proportion d'aucun des hydroxydes de métaux alcalins n'est supérieure à 70% en moles, en une quantité qui correspond pratiquement à la quantité stoechiométriquement requise pour la conversion du leucodérivé d'indigo en le sel neutre de leucodérivé d'indigo.

2. Solutions de leucodérivé d'indigo selon la revendication 1, dans lesquelles les hydroxydes de métaux alcalins contenus sont choisis dans le groupe constitué par l'hydroxyde de lithium, l'hydroxyde de sodium et l'hydroxyde de potassium.

3. Solutions de leucodérivé d'indigo selon la revendication 1 ou 2, qui contiennent de l'hydroxyde de sodium et de l'hydroxyde de potassium.

4. Solutions de leucodérivé d'indigo selon les revendications 1 à 3, qui contiennent de l'hydroxyde de sodium et de l'hydroxyde de potassium en un rapport molaire de 3:2 à 2:3.

5. Solutions de leucodérivé d'indigo selon les revendications 1 à 4, qui contiennent de 35 à 45% en poids de leucodérivé d'indigo.

6. Procédé pour la préparation de solutions de leucodérivé d'indigo selon les revendications 1 à 5, par hydrogénation catalytique de suspersions aqueusesalcalines d'indigo, **caractérisé en ce qu'**on effectue l'hydrogénation graduellement et en premier lieu une suspension d'indigo à 20-30% en poids, qui contient de 4 à 10% en poids d'un mélange d'au moins deux hydroxydes de métaux alcalins, dans lequel la proportion d'aucun des hydroxydes de métaux alcalins n'est supérieure à 70% en moles, est hydrogénée en leucodérivé d'indigo, puis on ajoute une nouvelle quantité d'indigo pour l'ajustement de la teneur finalement désirée en leucodérivé d'indigo, ainsi qu'éventuellement également une nouvelle quantité de mélange d'hydroxydes de métaux alcalins, et on poursuit l'hydrogénation.

7. Procédé pour la préparation de solutions de leucodérivé d'indigo selon les revendications 1 à 5, **caractérisé en ce qu'**on soumet d'abord à une hydrogénation catalytique une suspension aqueuse-alcaline d'indigo à 20-30% en poids, qui contient de 4 à 10% en poids d'un mélange d'au moins deux hydroxydes de métaux alcalins, dans lequel la proportion d'aucun des hydroxydes de métaux alcalins n'est supérieure à 70% en moles, et on ajuste par évaporation la solution obtenue de leucodérivé d'indigo à la teneur désirée en leucodérivé d'indigo.

8. Utilisation de solutions de leucodérivé d'indigo selon les revendications 1 à 5, pour la teinture de matériau textile contenant de la cellulose.
